# FASCICULE DE BREVET EUROPEEN

(11) **EP 4 281 618 B1**
(45) Date de publication et mention de la délivrance du brevet: **16.10.2024**
(21) Numéro de dépôt: 22705422.8
(22) Date de dépôt: 18.01.2022
(51) Int. Cl.: E01B 29/46, B23K 37/04, B23K 37/047, B23K 101/26

(54) **ENSEMBLE ET PROCÉDÉ D'ALIGNEMENT AUTOMATIQUE DE RAILS**
ANORDNUNG UND VERFAHREN ZUM AUTOMATISCHEN AUSRICHTEN VON SCHIENEN
ASSEMBLY AND METHOD FOR AUTOMATIC ALIGNING OF RAILS

(30) Priorité: 19.01.2021 FR 2100487
(43) Date de publication de la demande: 29.11.2023
(73) Titulaire: Pandrol, 59 590 Raismes (FR)
(72) Inventeur: DEMOND, Nicolas, 59700 Marcq en Baroeuil (FR); ERRABIE, Imad, 59300 Valenciennes (FR)
(74) Mandataire: Regimbeau
(86) Numéro de dépôt international: PCT/FR2022/050098
(87) Numéro de publication internationale: WO 2022/157449

(56) Documents cités:
- CN-A- 102 493 295
- FR-A1- 2 998 310
- US-A- 4 645 897
- US-A1- 2019 330 805
- US-B1- 8 684 279

## Description

### DOMAINE DE L'INVENTION

La présente invention concerne le domaine des systèmes pour l'alignement automatique de rails de voie ferrée, notamment en vue de leur soudage ultérieur.

### ETAT DE LA TECHNIQUE

Une voie ferrée comprend une pluralité de rails disposés les uns à la suite des autres selon une direction longitudinale. Un rail doit être aligné avec un rail adjacent, notamment en vue de réaliser ensuite son soudage au rail adjacent.

Des machines d'alignement actuelles permettent de réaliser l'alignement automatique de deux rails adjacents d'une voie ferrée. Ces machines d'alignement permettent en général également le soudage ultérieur du rail au rail adjacent, par exemple par le biais d'un soudage par étincelage.

Les machines d'alignement actuelles comprennent un bâti rigide adapté pour être positionné autour des rails à aligner, le bâti comprenant deux extrémités opposées. Les documents CN 102493295 A et US 4,645,897 décrivent par exemple des machines d'alignement et de soudage de rails comprenant de tels bâtis.

A chaque extrémité du bâti sont fixés des éléments de préhension et d'actionnement, chacun étant adapté pour être fixé à et actionner l'un des deux rails à aligner.

Le bâti permet ainsi de fournir une référence commune de positionnement des deux rails l'un par rapport à l'autre. Le bâti doit présenter une rigidité suffisante et être dimensionné pour supporter des efforts conséquents, de sorte à assurer cette référence géométrique commune entre les deux rails avec une précision suffisante.

En outre, il est nécessaire de conserver une zone dégagée au niveau de l'espace entre les deux rails à aligner, en vue de réaliser ensuite le soudage de ces deux rails. Chacune des deux extrémités opposées du bâti étant disposée au niveau du rail correspondant, les deux extrémités sont séparées par une distance minimale. La longueur du bâti est ainsi de l'ordre de 3 mètres ou plus.

En outre, ces machines d'alignement nécessitent la présence d'un bras de levage adapté pour soulever à la fois le bâti et les rails pendant leur alignement et/ou leur soudage. Le bras de levage doit être dimensionné pour soutenir le poids des rails et du bâti pendant l'alignement, les rails étant soulevés pour être mis en butée contre des éléments pour assurer leur alignement, ce qui augmente le poids et l'encombrement de la machine d'alignement. Cette grande longueur du bâti associée au besoin de rigidité impose d'avoir un bâti imposant et lourd.

La présence du bâti et du bras de levage augmente ainsi sensiblement le poids et l'encombrement de la machine d'alignement. Les machines d'alignement actuelles sont par conséquent lourdes et encombrantes. Les machines d'alignement actuelles pèsent plusieurs centaines des kilogrammes et occupent une surface au sol d'au moins environ 3m².

En raison de leur poids et de leur encombrement important, les machines d'alignement actuelles doivent, pour être déplacées sur la voie ferrée, être transportées à bord d'un train de maintenance, d'une pelleteuse, ou d'un camion de grande taille. Ces contraintes de transport diminuent la flexibilité et augmentent le coût de l'opération d'alignement des rails, et par conséquent le coût de la réalisation de la soudure des rails.

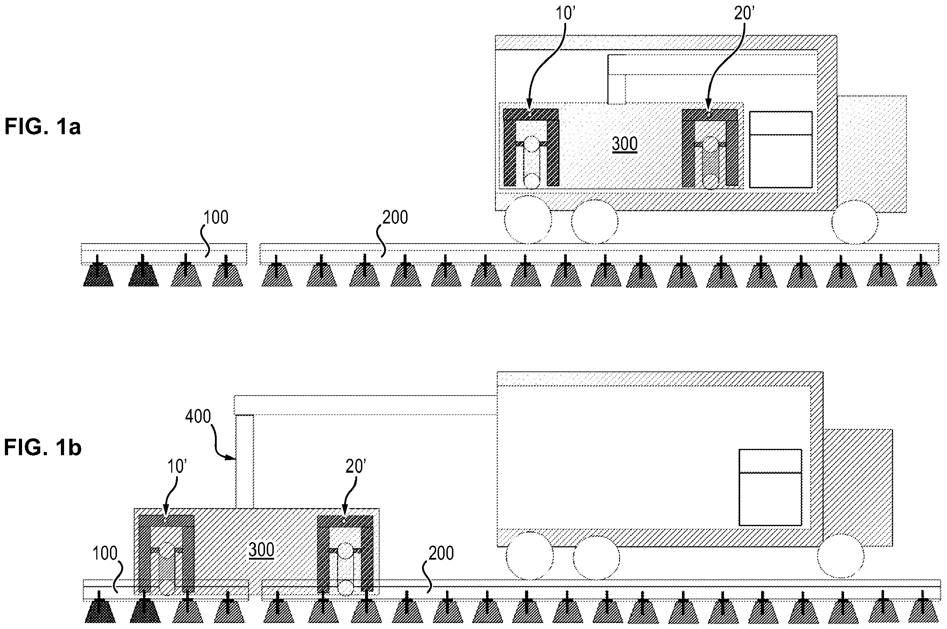

Les figures 1a et 1b illustrent un exemple de machine d'alignement de type existant. La machine d'alignement est transportée dans un camion de grande taille. La machine d'alignement comprend un bâti 300, qui est déplacé par un bras de levage 400. A chaque extrémité du bâti 300 est fixé un élément de préhension et d'actionnement 10', 20' respectif, chacun étant adapté pour être fixé à et actionner l'un des deux rails à aligner 100, 200. Une telle machine d'alignement présente les inconvénients mentionnés ci-dessus.

Les documents US 8 684 279 B1, FR2998 310A1 et US2019/330805 A1 décrivent des ensembles pour l'alignement de rails connus.

### EXPOSE DE L'INVENTION

Un but de l'invention est de proposer un ensemble d'alignement automatique des rails plus léger et plus compact que les ensembles d'alignement connus de l'art antérieur.

Selon un premier aspect, l'invention concerne un ensemble pour l'alignement automatique de rails, comprenant :
- un premier système d'alignement adapté pour être mis en place sur un premier élément de voie au niveau d'un premier rail ;
- un deuxième système d'alignement adapté être mis en place sur un deuxième élément de voie au niveau d'un deuxième rail ; et
- un système d'acquisition d'une position, comprenant au moins un capteur de position du premier rail et/ou du deuxième rail,
dans lequel le premier système d'alignement comprend un premier système d'actionnement adapté pour ajuster automatiquement une position du premier rail en fonction d'une position mesurée par le système d'acquisition et/ou le deuxième système d'alignement comprend un deuxième système d'actionnement adapté pour ajuster automatiquement une position du deuxième rail en fonction d'une position mesurée par le système d'acquisition.

Certaines caractéristiques préférées mais non limitatives de l'ensemble pour l'alignement automatique de rails décrit ci-dessus sont les suivantes, prises individuellement ou en combinaison :
- le système d'acquisition d'une position est adapté pour mesurer une position relative du premier rail et du deuxième rail l'un par rapport à l'autre ;
- chaque système d'actionnement comprend au moins un couple de vérins d'actionnement comprenant deux vérins, chaque vérin du couple de vérins d'actionnement étant adapté pour s'étendre d'un côté respectif du rail dont la position est à ajuster, et pour déplacer ledit rail en vue de son alignement ;
- chaque système d'actionnement comprend un couple de vérins d'actionnement en translation adapté pour déplacer ledit rail en translation le long d'une direction transversale de rail et/ou le long d'une direction de hauteur de rail ;
- chacun des deux vérins du couple de vérins d'actionnement en translation est adapté pour être positionné au contact d'un champignon du rail d'un côté respectif du champignon du rail ;
- chaque système d'actionnement comprend un couple de vérins d'actionnement en rotation adapté pour faire varier une inclinaison dudit rail autour d'une direction longitudinale de rail ;
- chaque système d'alignement comprend un élément de structure unique se présentant sous la forme d'une armature rigide adaptée pour s'étendre de part et d'autre du rail dont la position est à ajuster, dans lequel chaque vérin de l'au moins un couple de vérins d'actionnement est monté sur l'élément de structure unique ;
- chaque système d'alignement comprend deux éléments de structure distincts, chaque élément de structure étant adapté pour s'étendre d'un côté respectif du rail dont la position est à ajuster, dans lequel chaque vérin de l'au moins un couple de vérins d'actionnement est monté sur un élément de structure respectif ;
- chaque système d'alignement comprend au moins une accroche adaptée pour être fixée de manière amovible à au moins une accroche correspondante de l'élément de voie ;
- l'au moins une accroche du système d'alignement comprend une plaque adaptée pour être fixée à une accroche correspondante de l'élément de voie, ladite plaque étant réglable en fonction d'un type de ladite accroche de l'élément de voie ;
- l'élément de voie est une traverse de voie, et la plaque comprend :
   - des premiers moyens de fixation à une accroche de type tirefond ou de type tige filetée de la traverse de voie,
   - des deuxièmes moyens de fixation à une accroche de type clip de la traverse de voie, et
   - des troisièmes moyens de fixation au système d'alignement.

Selon un deuxième aspect, l'invention concerne un procédé d'alignement automatique de rails à l'aide d'un ensemble pour l'alignement automatique de rails le premier aspect, comprenant les étapes suivantes :
- mise en place du premier système d'alignement sur le premier élément de voie ;
- mise en place du deuxième système d'alignement sur le deuxième élément de voie ;
- acquisition d'une position du premier rail et/ou du deuxième rail au moyen du système d'acquisition d'une position ;
- ajustement automatique d'une position du premier rail et/ou du deuxième rail au moyen du premier système d'actionnement et/ou du deuxième système d'actionnement, de sorte à aligner le premier rail et le deuxième rail.

### DESCRIPTION DES FIGURES

D'autres caractéristiques, buts et avantages de la présente invention apparaîtront à la lecture de la description détaillée qui va suivre, donnée à titre d'exemple non limitatif, qui sera illustrée par les figures suivantes :
[Fig. 1a] [Fig. 1b] Les figures 1a et 1b, déjà commentées, représentent des vues de côté schématiques d'un système d'alignement de rails selon l'art antérieur, respectivement chargé dans un camion de transport et mis en place sur des rails à aligner.
[Fig. 2a] [Fig. 2b] Les figures 2a et 2b, déjà commentées, représentent des vues de côté schématiques d'un ensemble pour l'alignement automatique de rails selon un mode de réalisation de l'invention, respectivement chargé dans un camion de transport et mis en place sur des rails à aligner.
[Fig. 3a] [Fig. 3b] [Fig. 3c] [Fig. 3d] Les figures 3a à 3d représentent des vues de face schématiques d'un ensemble pour l'alignement automatique de rails selon un mode de réalisation de l'invention, dans différentes positions du système d'actionnement correspondant à différentes positions et orientations du rail correspondant.
[Fig. 4a] [Fig. 4b] Les figures 4a et 4b représentent des vues de face schématiques d'une fixation d'un ensemble pour l'alignement automatique de rails selon un mode de réalisation de l'invention respectivement à une accroche de type tirefond et à une accroche de type tige filetée de traverse de voie.
[Fig. 5a] [Fig. 5b] Les figures 5a et 5b représentent des vues du dessus schématiques d'une fixation d'un ensemble pour l'alignement automatique de rails selon un mode de réalisation de l'invention à une accroche de type tirefond ou de type tige filetée de traverse de voie, pour différentes positions transversales d'attache de la traverse de voie.
[Fig. 5c] La figure 5c représente une vue du dessus schématique d'une fixation d'un ensemble pour l'alignement automatique de rails selon un mode de réalisation de l'invention à une accroche de type clip de traverse de voie.
[Fig. 6a] [Fig. 6b] Les figures 6a et 6b représentent des vues de face schématiques d'une fixation d'un ensemble pour l'alignement automatique de rails selon un mode de réalisation de l'invention respectivement à une accroche de type clip et à une accroche de type tirefond de traverse de voie.
[Fig. 7a] [Fig. 7b] Les figures 7a et 7b représentent des vues du dessus schématiques d'une fixation d'un ensemble pour l'alignement automatique de rails selon un mode de réalisation de l'invention respectivement à une accroche de type clip et à une accroche de type tirefond de traverse de voie.
[Fig. 8] La figure 8 représente une vue de face schématique d'un ensemble pour l'alignement automatique de rails selon un autre mode de réalisation de l'invention.
[Fig. 9a] [Fig. 9b] Les figures 9a et 9b représentent respectivement une vue du dessus et une vue de face schématiques d'un système d'acquisition de position d'un ensemble pour l'alignement automatique de rails selon un mode de réalisation de l'invention.
[Fig. 9c] La figure 9c représente une vue du dessus schématique d'un système d'acquisition de position d'un ensemble pour l'alignement automatique de rails selon un mode de réalisation de l'invention.

### DESCRIPTION DETAILLEE DE L'INVENTION

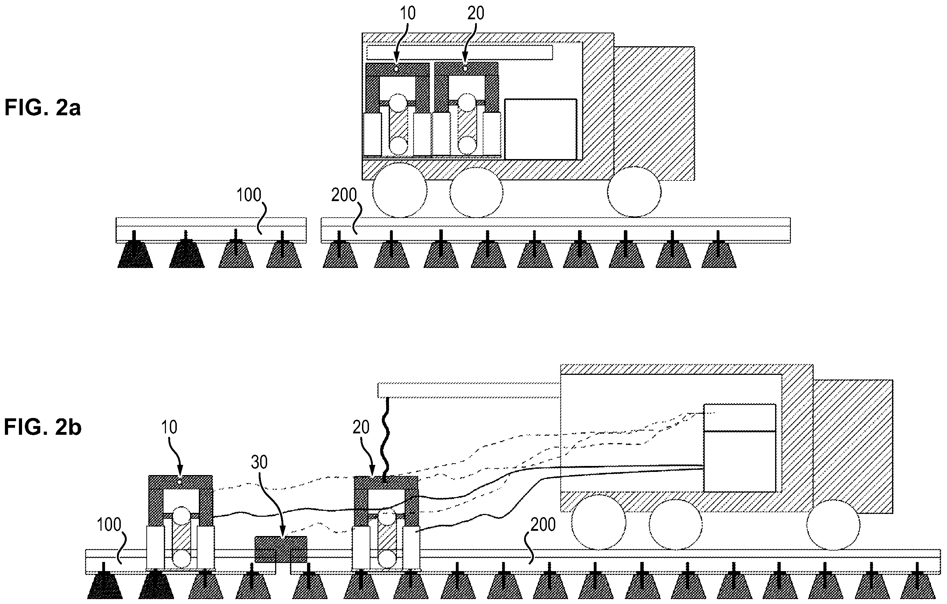

Un ensemble pour l'alignement automatique de rails est illustré à titre d'exemple non limitatif en figures 2a et 2b.

L'ensemble pour l'alignement automatique de rails comprend :
- un premier système d'alignement 10 adapté pour être mis en place sur un premier élément de voie 70 au niveau d'un premier rail 100 ;
- un deuxième système d'alignement 20 adapté être mis en place sur un deuxième élément de voie 70 au niveau d'un deuxième rail 200 ; et
- un système d'acquisition d'une position 30, comprenant au moins un capteur de position du premier rail 100 et/ou du deuxième rail 200.

Le premier système d'alignement 10 comprend un premier système d'actionnement 51, 52 adapté pour ajuster automatiquement une position du premier rail 100 en fonction d'une position mesurée par le système d'acquisition 30. En alternative ou en outre, le deuxième système d'alignement 20 comprend un deuxième système d'actionnement 51, 52 adapté pour ajuster automatiquement une position du deuxième rail 200 en fonction d'une position mesurée par le système d'acquisition 30.

Les systèmes d'alignement 10, 20 peuvent être mis en place sur, par exemple fixés de manière amovible à, posés sur, ou calés sur, des éléments de voie 70. Par conséquent, ce sont les éléments de voie 70 qui permettent de mettre en place les systèmes d'alignement 10, 20 l'un par rapport à l'autre, fournissant ainsi une référence commune de positionnement des deux rails 100, 200 l'un par rapport à l'autre. Les positions des systèmes d'alignement 10, 20 l'un par rapport à l'autre sont donc fixes, sans que l'ensemble d'alignement ne nécessite de bâti rigide sur lequel seraient fixés les deux systèmes d'alignement 10, 20.

En outre, l'alignement des rails 100, 200 est réalisé automatiquement par les systèmes d'actionnement 51, 52, en fonction d'une position mesurée par le système d'acquisition 30. Le système d'actionnement 51, 52 actionne ainsi automatiquement le rail 100, 200 correspondant en vue de réaliser son alignement. Ainsi, il n'est pas nécessaire de soulever et de déplacer les rails 100, 200 tout au long de l'opération d'alignement au moyen d'un bras de levage, mais simplement de déplacer le rail 100, 200 par le biais du ou des systèmes d'actionnement 51, 52, en fonction de la position mesurée. De ce fait, l'ensemble d'alignement peut s'affranchir de la présence du bras de levage.

La mise en place des systèmes d'alignement 10, 20 sur les éléments de la voie et l'alignement automatique des rails 100, 200 au moyen des systèmes d'actionnement 51, 52 permet d'alléger et de rendre plus compact l'ensemble d'alignement par rapport aux ensembles d'alignement existants.

L'ensemble d'alignement peut donc être transporté à bord d'un véhicule de moindre taille que les ensembles d'alignement existants. Par exemple, il peut être transporté à bord d'une camionnette, ou même être chargé sur un lorry pour être transporté le long des rails. L'ensemble d'alignement peut en outre être déchargé et positionné autour des rails 100, 200 à aligner par un opérateur, du fait de son poids réduit. Ainsi, les contraintes de transport sont diminuées, ce qui augmente en conséquence la flexibilité et diminue le coût de l'opération d'alignement des rails.

### Définitions

Un rail 100, 200 s'étend dans une direction sensiblement longitudinale X, qui correspond à une direction principale du rail.

Un rail 100, 200 comprend un patin, un champignon, et une âme adaptée pour relier le patin au champignon. Le champignon est opposé au patin dans une direction de hauteur Z du rail qui est sensiblement perpendiculaire à la direction longitudinale X. Le champignon est situé en une position plus haute que le pied du rail 100, 200. Une position dans la direction de hauteur Z du rail est appelée pointu.

Le rail 100, 200 peut être sensiblement symétrique vis-à-vis d'un plan de symétrie du rail s'étendant sensiblement dans la direction longitudinale X et dans la direction de hauteur Z et passant par un centre du rail 100, 200.

Une direction transversale Y du rail correspond à une direction sensiblement perpendiculaire à la direction longitudinale X et à la direction de hauteur Z du rail, c'est-à-dire au plan de symétrie du rail. Le patin est adapté pour être posé sur et fixé à des éléments de voie 70, en particulier à des traverses de voie 70, de sorte que les traverses 70 s'étendent sensiblement dans la direction transversale Y du rail. Une position dans la direction transversale Y du rail est appelée tracé.

Une inclinaison du rail 100, 200 autour de la direction longitudinale X du rail est appelée inclinaison.

Deux rails 100, 200 sont alignés lorsque leur pointu, leur tracé et leur inclinaison sont sensiblement identiques. En d'autres termes, deux rails 100, 200 sont alignés lorsqu'ils présentent sensiblement une même inclinaison autour de la direction longitudinale X, un même tracé dans la direction transversale Y, et lorsque leur pointu dans la direction de hauteur Z correspond à un même pointu objectif déterminé.

Deux rails 100, 200 alignés peuvent espacés dans la direction longitudinale X d'une certaine distance. L'espace présent entre les deux rails 100, 200 permet de réaliser ultérieurement la soudure des deux rails 100, 200 entre eux.

### Système d'acquisition

Le système d'acquisition d'une position 30 est adapté pour mesurer une position relative du premier rail 100 et du deuxième rail 200 l'un par rapport à l'autre.

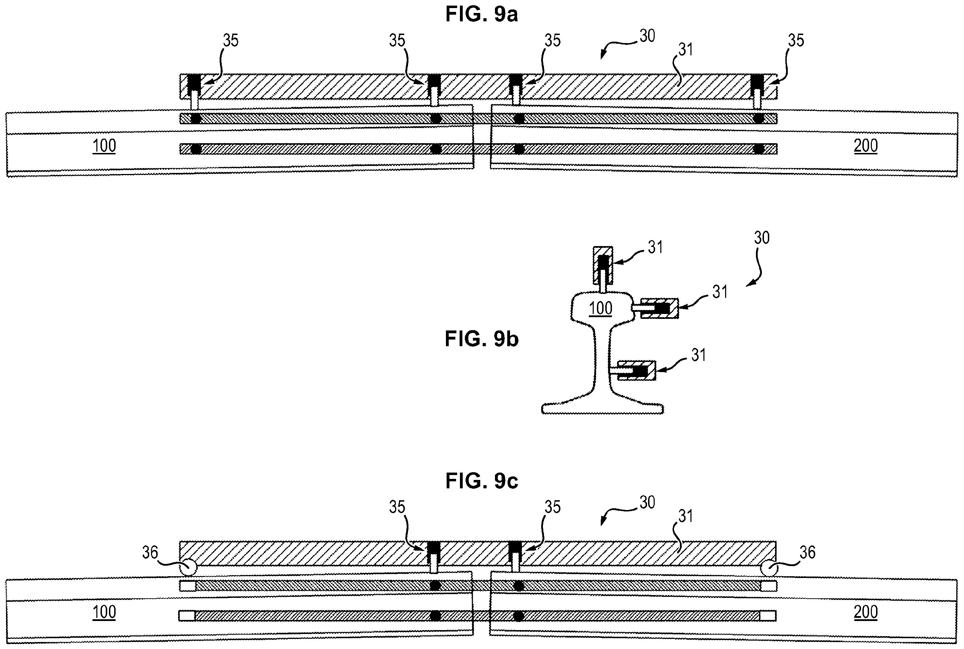

Le système d'acquisition 30 peut comprendre au moins une règle 31 adaptée pour être positionnée sur chacun des deux rails 100, 200 à aligner, ainsi qu'illustré à titre d'exemple non limitatif en figures 9a à 9c. Chaque règle 31 peut être fixée aux deux rails 100, 200 à aligner.

Chaque règle 31 comprend au moins un couple de capteurs 35 adapté pour mesurer une position d'un rail 100, 200. Un premier capteur du couple de capteurs 35 est positionné au niveau du premier rail 100 et mesure une position du premier rail 100, et un deuxième capteur du couple de capteurs 35 est positionné au niveau du deuxième rail 200 et mesure une position du deuxième rail 200. Chaque règle 31 peut être adapté pour mesurer le pointu et/ou le tracé et/ou l'inclinaison de chacun des deux rails 100, 200 à aligner.

Le pointu peut notamment être mesuré à une distance longitudinale déterminée d'une position de la soudure des rails 100, 200, et correspondre à une distance dans la direction de hauteur Z entre le haut du champignon du rail 100, 200 et la règle 31 de mesure du pointu du rail 100, 200. Le pointu peut être de l'ordre de quelques millimètres.

Par exemple, le système d'acquisition d'une position 30 peut comprendre trois règles 31. La figure 9b illustre ainsi un exemple non limitatif d'un premier rail 100, sur lequel sont positionnés trois règles 31 du système d'acquisition d'une position 30. Une première règle est adaptée pour mesurer le pointu, une deuxième règle est adaptée pour mesurer le tracé, et une troisième règle est adaptée pour mesurer l'inclinaison du premier rail 100 à aligner.

L'alignement des rails 100, 200 suivant la position mesurée par une règle 31 peut être réalisé lorsque les positions mesurées par le premier et le deuxième capteur d'un même couple de capteurs 35 de ladite règle 31 sont identiques. Plus particulièrement, l'alignement des rails 100, 200 respectivement en tracé et en inclinaison peut être réalisé lorsque respectivement le tracé et l'inclinaison mesurés par tous les couples de capteurs des règles respectives de mesure du tracé et de l'inclinaison 31, est identique.

L'alignement des rails 100, 200 en pointu peut être réalisé lorsque les positions mesurées par les couples de capteur de la règle 31 adaptée pour mesurer le pointu correspondent à un pointu objectif, qui peut être choisi par le soudeur. Le pointu objectif peut être de 1,5 mm.

Chaque règle 31 mise en place sur deux rails 100, 200 à aligner peut comprendre deux couples de capteurs 35, le système d'acquisition 30 comprenant donc douze capteurs 35, ainsi qu'illustré à titre d'exemple non limitatif en figure 9a. L'alignement suivant la position mesurée par la règle 31 est réalisé lorsque les quatre capteurs 35 de la règle 31 mesurent une position identique.

En variante, chaque règle 31 mise en place sur deux rails 100, 200 à aligner peut comprendre un seul couple de capteurs 35, le système d'acquisition 30 comprenant six capteurs 35, ainsi qu'illustré à titre d'exemple non limitatif en figure 9c. Cette variante présente l'avantage de simplifier le système, en diminuant le nombre de capteurs. Chaque règle 31 comprend alors en outre deux plots 36 d'épaisseur fixe. Une mise à zéro de la règle 31 est nécessaire pour prendre en compte la hauteur des plots 36.

### Système d'alignement

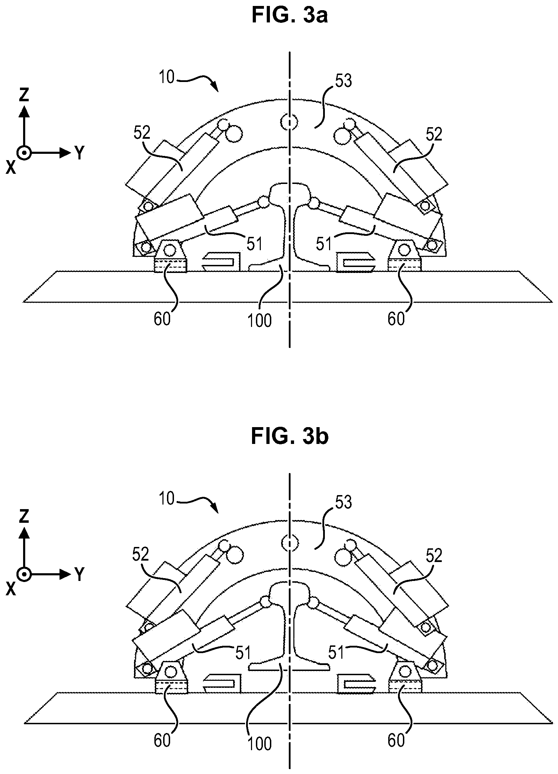

Les figures 3a à 3d, 4a, 4b, 6a et 6b illustrent à titre d'exemple non limitatif un premier système d'alignement 10 de rail disposé au niveau d'un premier rail 100. Il est entendu que le deuxième système d'alignement 20 peut être sensiblement identique au premier système d'alignement 10. Dans la suite de la demande, toute description effectuée en relation au premier système d'alignement 10 peut s'appliquer de la même façon au deuxième système d'alignement 20.

Le premier système d'alignement 10 est adapté pour s'étendre au niveau d'un premier rail 100, de sorte à ajuster la position du premier rail 100. Plus particulièrement, le premier système d'alignement 10 peut être adapté pour s'étendre de part et d'autre du premier rail 100, c'est-à-dire d'un côté et de l'autre du premier rail 100 dans la direction transversale Y. De même, le deuxième système d'alignement 20 peut être adapté pour s'étendre de part et d'autre du deuxième rail 200 dans la direction transversale Y.

Chaque système d'alignement 10, 20 peut présenter un plan de symétrie respectif correspondant sensiblement au plan de symétrie du rail 100, 200 au niveau duquel le système d'alignement 10, 20 est disposé et dont la position est à ajuster. Ainsi, le plan de symétrie du premier système d'alignement 10 peut correspondre au plan de symétrie du premier rail 100, et le plan de symétrie du deuxième système d'alignement 20 peut correspondre au plan de symétrie du deuxième rail 200.

Chaque système d'actionnement 51, 52 peut comprendre au moins un couple de vérins d'actionnement 51, 52 comprenant deux vérins. Chaque vérin du couple de vérins d'actionnement 51, 52 est adapté pour s'étendre d'un côté respectif du rail 100, 200 dont la position est à ajuster, et pour déplacer ledit rail 100, 200 en vue de son alignement.

En d'autres termes, les deux vérins de chaque couple de vérins d'actionnement 51, 52 sont disposés de part et d'autre du rail 100, 200 dans la direction transversale Y.

Ainsi, chaque vérin du couple de vérins d'actionnement 51, 52 est susceptible d'entrer en contact avec le rail 100, 200 de part et d'autre de celui-ci, de sorte à former une pince de rail 100, 200.

Chaque système d'actionnement 51, 52 peut comprendre un couple de vérins d'actionnement en translation 51 adapté pour déplacer le rail 100, 200 dont la position est à ajuster en translation le long de la direction transversale Y du rail et/ou le long de la direction de hauteur Z du rail.

Chacun des deux vérins du couple de vérins d'actionnement en translation 51 peut être adapté pour être positionné au contact d'un champignon du rail 100, 200 d'un côté respectif dudit champignon.

Plus particulièrement, chacun des deux vérins d'actionnement en translation peut être monté sur un élément de structure 53, 54 du système d'alignement 10, 20 et être adapté pour s'étendre depuis l'élément de structure 53, 54 du système d'alignement 10, 20 vers un champignon du rail 100, 200 correspondant, de sorte qu'un actionnement des vérins d'actionnement en translation entraîne l'application d'une force sur le champignon du rail 100, 200 correspondant.

Plus particulièrement, chacun des deux vérins d'actionnement en translation peut comprendre une première extrémité montée sur l'élément de structure 53, 54 du système d'actionnement 51, 52 et une deuxième extrémité opposée à la première extrémité. La deuxième extrémité est adaptée pour venir au contact du champignon du rail 100, 200, en particulier au contact d'une surface inférieure du champignon, le champignon du rail 100, 200 reposant alors sensiblement sur les deux vérins. Chaque vérin peut être adapté pour s'étendre sensiblement en diagonale à la fois dans une direction transversale Y et dans une direction de hauteur Z du rail.

Un actionnement similaire et conjoint des deux vérins peut permettre de régler un pointu du rail 100, 200, c'est-à-dire d'actionner le rail 100, 200 en translation dans la direction de hauteur Z. Un actionnement opposé et conjoint des deux vérins peut permettre de régler un tracé du rail 100, 200, c'est-à-dire d'actionner le rail 100, 200 en translation dans la direction transversale Y.

Par exemple, une augmentation simultanée et équivalente de la course de chacun des deux vérins permet de pousser le champignon du rail 100, 200 vers le haut, et ainsi de soulever le rail 100, 200 par rapport à la voie dans la direction de hauteur Z du rail, c'est-à-dire d'augmenter le pointu du rail 100, 200. A l'inverse, une diminution simultanée et équivalente de la course de chacun des deux vérins entraîne un déplacement du rail 100, 200 vers le bas sous l'effet de la gravité, diminuant le pointu du rail 100, 200.

Un plus grand déploiement de l'un des deux vérins par rapport à l'autre permet de déplacer le rail 100, 200 dans la direction transversale Y du côté opposé au vérin le plus déployé. En d'autres termes, une augmentation de la course d'un seul vérin, qui peut être conjointe à une diminution correspondante de la course de l'autre vérin, permet de pousser le champignon du rail 100, 200 d'un côté ou de l'autre dans la direction transversale Y du rail, modifiant ainsi le tracé du rail 100, 200.

Chaque système d'actionnement 51, 52 peut comprendre un couple de vérins d'actionnement en rotation 52 adapté pour faire varier une inclinaison dudit rail 100, 200 autour de la direction longitudinale X du rail.

Chacun des deux vérins du couple de vérins d'actionnement en rotation 52 peut être adapté pour être positionné au contact d'un pied du rail 100, 200 ou de l'âme du rail 100, 200, d'un côté respectif dudit pied ou de ladite âme.

Plus particulièrement, chacun des deux vérins d'actionnement en rotation peut être monté sur un élément de structure 53, 54 du système d'alignement 10, 20 et être adapté pour s'étendre depuis l'élément de structure 53, 54 du système d'alignement 10, 20 vers un pied du rail 100, 200 correspondant ou vers l'âme du rail 100, 200 correspondant, de sorte qu'un actionnement des vérins d'actionnement en rotation entraîne l'application d'une force sur le pied ou sur l'âme du rail 100, 200 correspondant.

Plus particulièrement, chacun des deux vérins d'actionnement en rotation peut comprendre une première extrémité montée sur l'élément de structure 53, 54 du système d'actionnement 51, 52 et une deuxième extrémité opposée à la première extrémité.

La deuxième extrémité est adaptée pour venir au contact du pied ou de l'âme du rail 100, 200, en particulier peut être adaptée pour venir au contact d'une surface supérieure du pied lorsqu'un alignement du rail 100, 200 en inclinaison doit être réalisé. Chaque vérin peut être adapté pour s'étendre sensiblement en diagonale à la fois dans une direction transversale Y et dans une direction de hauteur Z du rail.

Un actionnement d'un seul des deux vérins peut permettre de régler une inclinaison du rail 100, 200 par rapport à la direction longitudinale X.

Un tel système d'actionnement 51, 52 comprenant un couple de vérins d'actionnement en translation 51 et un couple de vérins d'actionnement en rotation 52 permet de régler de manière simple l'alignement du rail 100, 200 en pointu en tracé, et en inclinaison. Le nombre de pièces est réduit, et la cinématique d'alignement est simple.

A titre d'exemple non limitatif, la figure 3a illustre un premier système d'actionnement 51, 52 disposé autour du premier rail 100 et mis en place sur des traverses de voie 70. Le premier système d'actionnement 51, 52 comprend un couple de vérins d'actionnement en translation 51 et un couple de vérins d'actionnement en rotation 52. Les deux vérins du couple de vérins d'actionnement 51, 52 sont rétractés, de sorte que le premier rail 100 n'est pas soulevé, le premier rail 100 étant posé sur les traverses de voie 70. Le premier rail 100 est dans une position nominale, c'est-à-dire présente une hauteur nominale, une position transversale nominale et une inclinaison nulle.

La figure 3b illustre un exemple de premier rail 100 dont la position dans la direction de hauteur Z est modifiée par rapport à sa position nominale par les deux vérins d'actionnement en translation du premier système d'actionnement 51, 52. Les deux vérins du couple de vérins d'actionnement 51, 52 sont déployés, de sorte que le premier rail 100 est soulevé par rapport à la voie, son pointu étant modifié. La position transversale représenté en figure 3b correspond sensiblement et la position transversale nominale du premier rail 100, et l'inclinaison du premier rail 100 est sensiblement nulle.

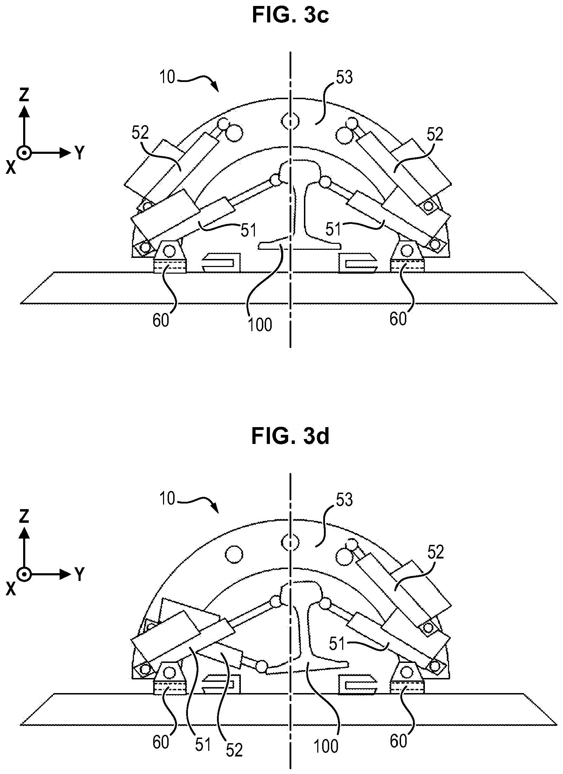

La figure 3c illustre un exemple de premier rail 100 dont la position dans la direction transversale Y est modifiée par rapport à sa position transversale nominale par les deux vérins d'actionnement en translation du premier système d'actionnement 51, 52. Un vérin est plus déployé que l'autre, de sorte que le premier rail 100 est déplacé du côté opposé au vérin le plus déployé, son tracé étant modifié. La hauteur du premier rail 100 représenté en figure 3c correspond sensiblement à la hauteur du premier rail 100 représenté en figure 3b, et l'inclinaison du premier rail 100 est sensiblement nulle.

La figure 3d illustre un exemple de premier rail 100 dont l'inclinaison par rapport à la direction longitudinale X est modifiée par rapport à l'inclinaison nulle par les deux vérins d'actionnement en translation du premier système d'actionnement 51, 52. Un seul des deux vérins est déployé, de sorte à régler l'inclinaison du premier rail 100 par rapport à la direction longitudinale X. La hauteur du premier rail 100 représenté en figure 3d correspond sensiblement à la hauteur du premier rail 100 illustrée en figure 3b, la position transversale du premier rail 100 correspond sensiblement à la position transversale nominale du premier rail 100.

Dans un premier mode de réalisation, illustré à titre d'exemple non limitatif en figures 3a à 3d, 4a, 4b et 5a à 5c, chaque système d'alignement 10, 20 comprend un élément de structure unique 53 se présentant sous la forme d'une armature rigide adaptée pour s'étendre de part et d'autre du rail 100, 200 dont la position est à ajuster. Chaque vérin de l'au moins un couple de vérins d'actionnement 51, 52 est monté sur l'élément de structure unique 53. L'ensemble d'alignement de ce premier mode de réalisation présente un nombre de pièces réduit.

L'armature rigide 53 peut présenter sensiblement une forme en demi-cercle, et être adaptée pour être centrée sur le rail 100, 200 autour duquel le système d'alignement 10, 20 est aligné. Les vérins du couple de vérins d'actionnement en translation 51 et/ou du couple de vérins d'actionnement en rotation 52 peuvent être montés sur une partie basse de chaque extrémité du demi-cercle de l'armature rigide 53.

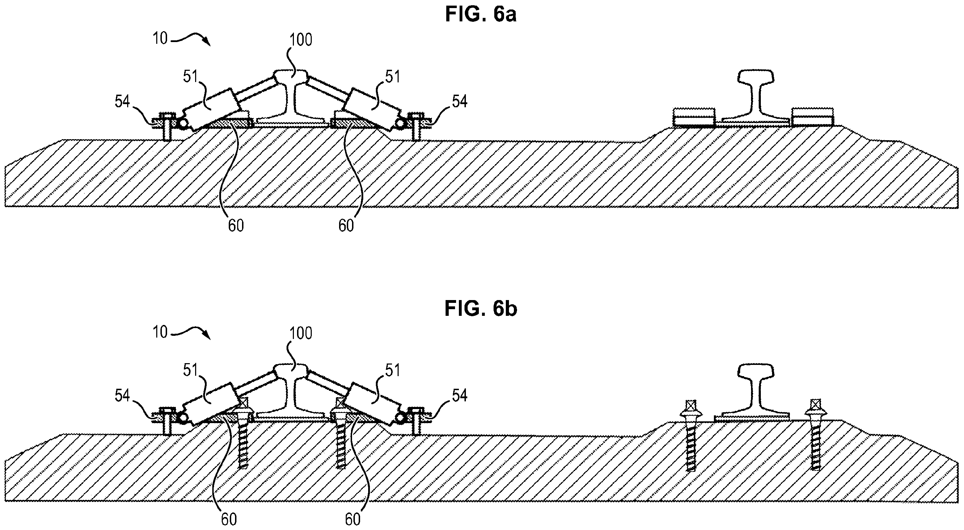

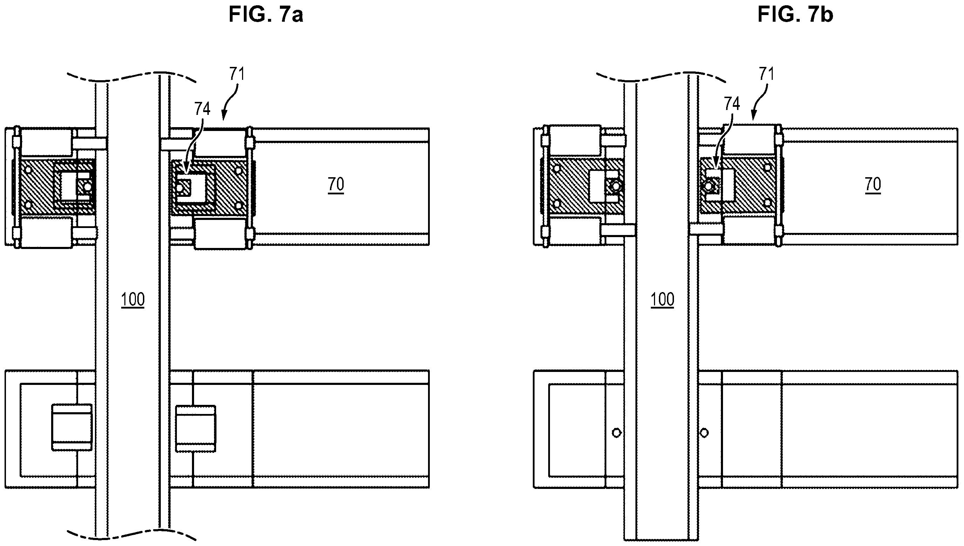

Dans un deuxième mode de réalisation, illustré à titre d'exemple non limitatif en figures 6a, 6b, 7a et 7b, chaque système d'alignement 10, 20 comprend deux éléments de structure distincts 54. Chaque élément de structure 54 est adapté pour s'étendre d'un côté respectif du rail 100, 200 dont la position est à ajuster. Chaque vérin de l'au moins un couple de vérins d'actionnement 51, 52 est monté sur un élément de structure 54 respectif. L'ensemble d'alignement de ce deuxième mode de réalisation présente un poids et un encombrement encore réduits.

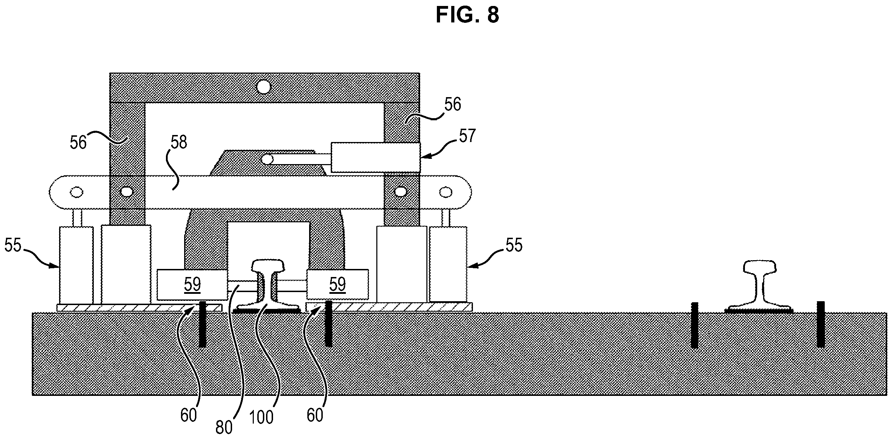

Un autre mode de réalisation d'un ensemble pour l'alignement automatique de rails est illustré à titre d'exemple non limitatif en figure 8.

L'ensemble pour l'alignement automatique de rails comprend un système d'actionnement 51, 52 comprenant un couple de vérins d'actionnement 55 et un vérin d'actionnement supplémentaire 57.

Le couple de vérins d'actionnement 55 comprend deux vérins d'actionnement 55 disposés de part et d'autre du rail 100, 200 dans la direction transversale Y. Le couple de vérins d'actionnement 55 est adapté pour modifier une position du rail 100, 200 à la fois en translation dans une direction de hauteur Z pour aligner le rail 100, 200 en pointu, et en rotation autour de l'axe longitudinal pour aligner le rail 100, 200 en inclinaison. La translation dans la direction de hauteur Z est guidée par des glissières 56 disposées de part et d'autre du rail 100, 200 et s'étendant sensiblement dans la direction de hauteur Z du rail.

Une modification identique de la hauteur des deux vérins 55 entraîne une modification de la hauteur du rail 100, 200. Une modification différente de la hauteur des deux vérins 55 entraîne une modification de l'inclinaison du rail 100, 200.

Le vérin d'actionnement supplémentaire 57 est adapté pour être disposé sensiblement au-dessus du rail 100, 200. Le vérin d'actionnement supplémentaire 57 est adapté pour modifier une position du rail 100, 200 en translation selon la direction transversale Y du rail pour aligner le rail 100, 200 en tracé. La translation dans la direction transversale Y est guidée par une glissière 58 adaptée pour s'étendre sensiblement au-dessus du rail 100, 200, dans la direction transversale Y du rail.

L'ensemble pour l'alignement automatique de rails comprend en outre deux vérins de serrage 59 disposés de part et d'autre du rail 100, 200 et adaptés pour enserrer le rail 100, 200 via une mâchoire 80 disposée de part et d'autre et au contact du rail 100, 200. L'actionnement des vérins d'actionnement 55, 57 entraîne l'application d'une force sur le rail 100, 200 par le biais du couple de vérins de serrage 59.

### Mise en place des systèmes d'alignement 10, 20 sur les éléments de voie 70

Dans un premier exemple de réalisation, le premier système d'alignement 10 est adapté pour être posé sur, ou calé sur, le premier élément de voie 70, et le deuxième système d'alignement 20 est adapté pour être posé sur, ou calé sur, le deuxième élément de voie 70.

Le poids des rails 100, 200, permet de maintenir les systèmes d'alignement 10, 20 en place par rapport aux éléments de voie 70, en particulier permet de bloquer les systèmes d'alignement 10, 20 dans la direction transversale Y.

Ce premier exemple de réalisation peut notamment être utilisé dans le cas d'une voie en ligne droite, c'est-à-dire lorsque peu d'efforts radiaux sont susceptibles de s'exercer sur les systèmes d'alignement 10, 20.

En particulier, lorsque les éléments de voie 70 sont des traverses, les systèmes d'alignement 10, 20, peuvent être adaptés pour être posés sur, ou calés sur, les traverses 70 respectives, de part et d'autre des rails 100, 200, respectifs.

Dans un deuxième exemple de réalisation, le premier système d'alignement 10 est adapté pour être fixé de manière amovible au premier élément de voie 70, et le deuxième système d'alignement 20 est adapté être fixé de manière amovible au deuxième élément de voie 70.

Plus particulièrement, chaque système d'alignement 10, 20 peut comprendre au moins une accroche 60 adaptée pour être fixée de manière amovible à au moins une accroche correspondante de l'élément de voie 70.

Ce deuxième exemple de réalisation peut notamment être utilisé dans le cas d'une voie courbe, c'est-à-dire lorsque des efforts radiaux importants sont susceptibles de s'exercer sur les systèmes d'alignement 10, 20.

L'accroche 60 peut être adaptée pour être disposée en une partie basse d'un élément de structure 53, 54 du système d'alignement 10, 20.

Chaque système d'alignement 10, 20 peut comprendre deux accroches 60 adaptées pour s'étendre de part et d'autre du rail 100, 200 au niveau duquel le système d'alignement 10, 20 est situé, de manière sensiblement symétrique par rapport au plan de symétrie du rail, en regard de deux accroches correspondantes de l'élément de voie 70. Ainsi, le système d'alignement 10, 20 est fixé sur l'élément de voie 70 par le biais de deux accroches 60.

L'au moins une accroche 60 du système d'alignement 10, 20 peut comprendre une plaque 71 adaptée pour être fixée à une accroche correspondante de l'élément de voie 70. Ladite plaque 71 peut comprendre plusieurs moyens de fixation différents adaptés pour assurer une fixation de la plaque 71 à plusieurs types d'accroches différents de l'élément de voie 70. Ainsi, le système d'alignement 10, 20 peut être fixé à des éléments de voie 70 présentant des accroches de types différents. L'ensemble d'alignement présente donc une grande modularité, et peut s'adapter à différents types de voies.

En particulier, l'élément de voie 70 peut être une traverse de voie. La traverse de voie 70 peut présenter différents types d'accroche, par exemple une accroche de type tirefond, de type tige filetée, ou de type clip.

La plaque de réglage 71 peut comprendre :
- des premiers moyens de fixation à une accroche de type tirefond ou de type tige filetée de la traverse de voie 70,
- des deuxièmes moyens de fixation à une accroche de type clip de la traverse de voie 70, et
- des troisièmes moyens de fixation au système d'alignement 10, 20.

La plaque de réglage 71 du système d'alignement 10, 20 permet ainsi une fixation à une traverse de voie 70 comprenant une accroche de type tirefond, tige filetée ou clip. Le système d'alignement 10, 20 peut donc être fixé à une majorité des traverses de voie 70 existantes.

En fonction du type d'accroche de la traverse de voie 70, les premiers moyens de fixation et/ou les deuxièmes moyens de fixation de la plaque 71 sont disposés au contact de l'accroche correspondante la traverse de voie 70. La plaque 71 peut pouvoir être retournée pour placer les moyens de fixation souhaités au contact de la traverse de voie 70.

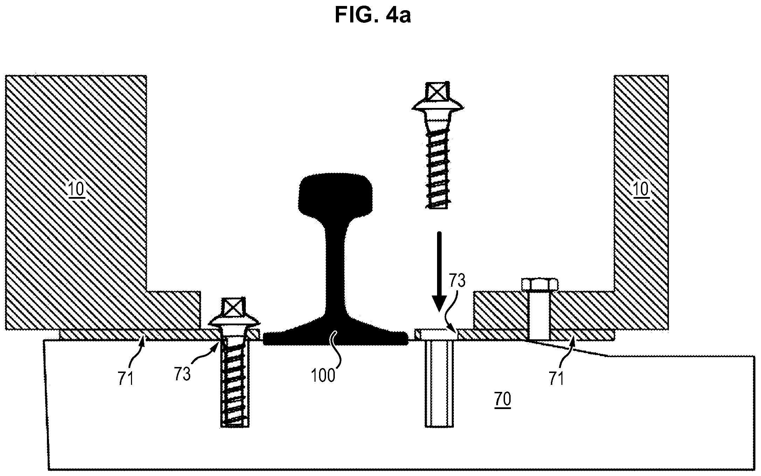

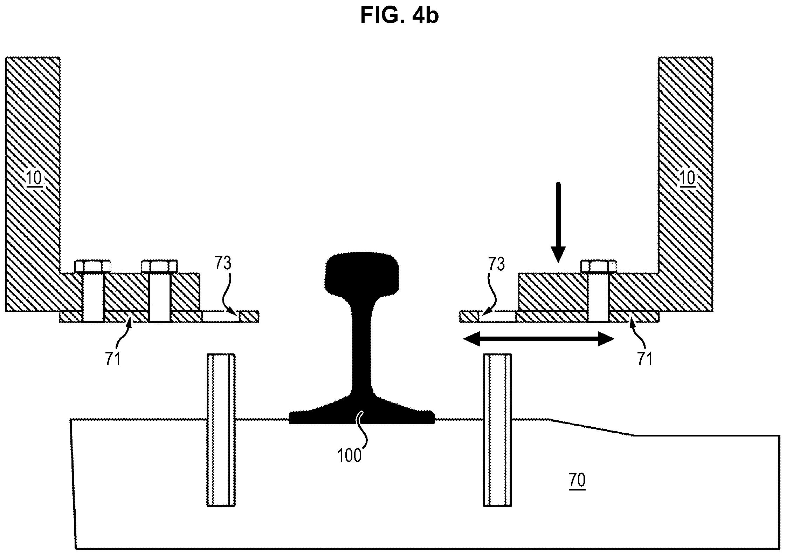

Les figures 4a, 4b, 5a, 5b, 6b et 7b représentent à titre d'exemple non limitatif une fixation de la plaque 71 à une accroche de type tirefond ou de type tige filetée de traverse de voie 70. Les premiers moyens de fixation de la plaque 71 peuvent comprendre un orifice traversant 73 adapté pour s'étendre en regard d'un orifice correspondant percé dans la traverse de voie 70. L'orifice traversant 73 peut présenter des formes et des dimensions adaptées pour s'étendre autour d'une tige filetée de la traverse de voie 70, et/ou pour recevoir un tirefond.

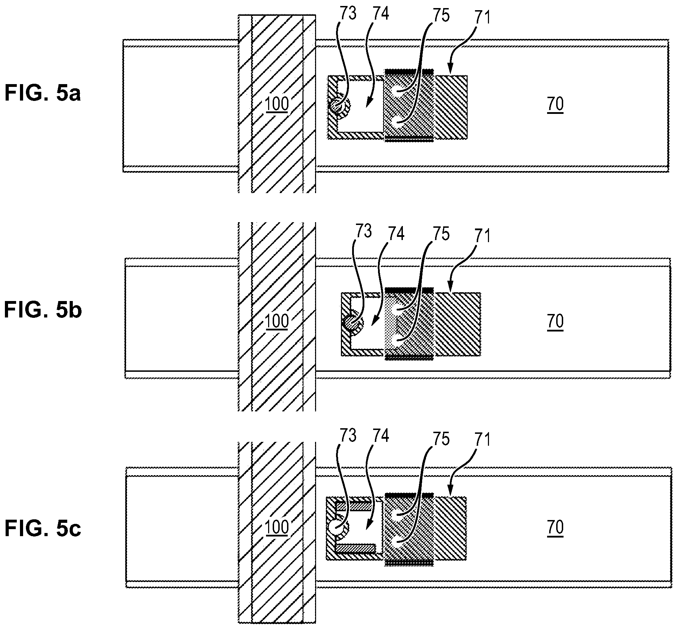

Les figures 5c, 6a et 7a représentent à titre d'exemples non limitatifs une fixation de la plaque 71 à une accroche de type clip de traverse de voie 70. Les deuxièmes moyens de fixation de la plaque 71 peuvent comprendre une lumière traversante 74 adaptée pour s'étendre autour d'un clip de la traverse de voie 70. La lumière 74 de la plaque 71 peut être sensiblement rectangulaire, ainsi qu'illustré en figures 5c, 6a et 7a. En variante, les deuxièmes moyens de fixation de la plaque 71 peuvent comprendre une patte adaptée pour être mise au contact du rail 100, 200 lorsque la plaque 71 est posée sur la traverse de voie 70. La patte comprend des moyens de fixations adaptés pour fixer la patte au rail 100, 200.

Par exemple, la patte peut être articulée en rotation par rapport à la plaque 71 par le biais d'une charnière, de sorte qu'une fois la plaque 71 posée sur la traverse de voie 70, la patte peut être actionnée en rotation pour venir en contact du rail 100, 200 correspondant. La patte peut présenter des moyens de clipsage adaptés pour clipser la patte au rail 100, 200 une fois que la patte est au contact du rail 100, 200.

Une distance selon la direction transversale Y de l'accroche de traverse de voie 70 au rail 100, 200, c'est-à-dire un entraxe de l'accroche de traverse de voie 70, est susceptible de varier selon le type de traverse de voie 70. La plaque de réglage 71 peut comprendre un moyen de réglage de l'entraxe 75 permettant de s'adapter à différentes distances transversales de l'accroche de traverse de voie 70 au rail 100, 200.

Les moyens de réglage de l'entraxe 75 peuvent être disposées à proximité des troisièmes moyens de fixation de la plaque 71. Les moyens de réglage de l'entraxe 75 peuvent consister en au moins une, par exemple deux, vis de réglage de l'entraxe.

Les figures 5a et 5b illustrent à titre d'exemple non limitatif deux exemples de plaque de réglage 71 d'un système d'alignement 10, 20 mises en place sur deux accroches de traverse de voie 70 de type tirefonds ou de type tige filetée présentant des entraxes différents à l'aide de deux vis de réglage de l'entraxe 75. L'accroche de traverse de voie 70 de la figure 5a est disposée plus proche du rail 100, 200, c'est-à-dire présente un entraxe moindre, que l'accroche de traverse de voie 70 de la figure 5b.

### Système de commande

L'ensemble d'alignement peut comporter un système de commande adapté pour commander un actionnement des systèmes d'actionnement 51, 52 de l'ensemble d'alignement en fonction d'une position mesurée par le système d'acquisition 30.

Le système de commande peut comprendre une unité de contrôle adaptée pour fournir une commande d'actionnement des systèmes d'actionnement 51, 52 de l'ensemble d'alignement en fonction d'une position mesurée par le système d'acquisition 30. L'unité de contrôle comprend un processeur adapté pour calculer, à partir de la position mesurée par le système d'acquisition 30, une commande d'actionnement des systèmes d'actionnement 51, 52, plus particulièrement de chaque vérin de l'ensemble d'alignement, en vue d'aligner les rails 100, 200.

Le système de commande peut comprendre un groupe hydraulique, un moteur électrique, ou une batterie, adapté pour déplacer un ou plusieurs vérins.

Le système de commande peut être adapté pour être déchargé sur la voie avec le reste de l'ensemble d'alignement, ou être adapté pour rester dans un système de transport de l'ensemble d'alignement sur la voie.

### Procédé d'alignement automatique de rails

Un procédé d'alignement automatique de rails à l'aide d'un ensemble pour l'alignement automatique de rails du type décrit ci-dessus comprend les étapes suivantes :
- mise en place du premier système d'alignement 10 sur le premier élément de voie 70 ;
- mise en place du deuxième système d'alignement 20 sur le deuxième élément de voie 70 ;
- acquisition d'une position du premier rail 100 et/ou du deuxième rail 200 au moyen du système d'acquisition d'une position 30 ;
- ajustement automatique d'une position du premier rail 100 et/ou du deuxième rail 200 au moyen du premier système d'actionnement 51, 52 et/ou du deuxième système d'actionnement 51, 52, de sorte à aligner le premier rail 100 et le deuxième rail 200.

Le procédé décrit permet d'aligner les rails 100, 200 de manière automatique et à l'aide d'un dispositif présentant un poids et un encombrement réduits.

L'étape d'acquisition d'une position peut être précédée d'une étape de mise en place du système d'acquisition d'une position 30, en particulier de chacune des règles 31 du système d'acquisition 30, sur les deux rails 100, 200.

L'alignement des rails 100, 200 peut être suivi d'une étape de soudure des rails 100, 200, par exemple par soudure aluminothermique.

D'autres modes de réalisation peuvent être envisagés et une personne du métier peut facilement modifier les modes ou exemples de réalisation exposés ci-dessus ou en envisager d'autres tout en restant dans la portée de l'invention.

## Revendications

1. Ensemble pour l'alignement automatique de rails, comprenant :
- un premier système d'alignement (10) adapté pour être mis en place sur un premier élément de voie (70) au niveau d'un premier rail (100) ;
- un deuxième système d'alignement (20) adapté pour être mis en place sur un deuxième élément de voie (70) au niveau d'un deuxième rail (200) ;
**caractérisé en ce que** ledit ensemble comprend en outre
- un système d'acquisition d'une position (30), comprenant au moins un capteur de position du premier rail (100) et/ou du deuxième rail (200), dans lequel le premier système d'alignement (10) comprend un premier système d'actionnement (51, 52) adapté pour ajuster automatiquement une position du premier rail (100) en fonction d'une position mesurée par le système d'acquisition (30) et/ou le deuxième système d'alignement (20) comprend un deuxième système d'actionnement (51, 52) adapté pour ajuster automatiquement une position du deuxième rail (200) en fonction d'une position mesurée par le système d'acquisition (30).

2. Ensemble pour l'alignement automatique de rails selon la revendication 1, dans lequel le système d'acquisition d'une position (30) est adapté pour mesurer une position relative du premier rail (100) et du deuxième rail (200) l'un par rapport à l'autre.

3. Ensemble pour l'alignement automatique de rails selon la revendication 1 ou la revendication 2, dans lequel chaque système d'actionnement (51, 52) comprend au moins un couple de vérins d'actionnement (51, 52) comprenant deux vérins, chaque vérin du couple de vérins d'actionnement (51, 52) étant adapté pour s'étendre d'un côté respectif du rail (100, 200) dont la position est à ajuster, et pour déplacer ledit rail (100, 200) en vue de son alignement.

4. Ensemble pour l'alignement automatique de rails selon la revendication 3, dans lequel chaque système d'actionnement (51, 52) comprend un couple de vérins d'actionnement en translation (51) adapté pour déplacer ledit rail (100, 200) en translation le long d'une direction transversale de rail (Y) et/ou le long d'une direction de hauteur de rail (Z).

5. Ensemble pour l'alignement automatique de rails selon la revendication 4, dans lequel chacun des deux vérins du couple de vérins d'actionnement en translation (51) est adapté pour être positionné au contact d'un champignon du rail (100, 200) d'un côté respectif du champignon du rail (100, 200).

6. Ensemble pour l'alignement automatique de rails selon l'une des revendications 3 à 5, dans lequel chaque système d'actionnement (51, 52) comprend un couple de vérins d'actionnement en rotation (52) adapté pour faire varier une inclinaison dudit rail (100, 200) autour d'une direction longitudinale de rail (X).

7. Ensemble pour l'alignement automatique de rails selon l'une quelconque des revendications 3 à 6, dans lequel chaque système d'alignement (10, 20) comprend un élément de structure unique (53) se présentant sous la forme d'une armature rigide adaptée pour s'étendre de part et d'autre du rail (100, 200) dont la position est à ajuster, dans lequel chaque vérin de l'au moins un couple de vérins d'actionnement (51, 52) est monté sur l'élément de structure unique (53).

8. Ensemble pour l'alignement automatique de rails selon l'une quelconque des revendications 3 à 6, dans lequel chaque système d'alignement (10, 20) comprend deux éléments de structure distincts (54), chaque élément de structure (54) étant adapté pour s'étendre d'un côté respectif du rail (100, 200) dont la position est à ajuster, dans lequel chaque vérin de l'au moins un couple de vérins d'actionnement (51, 52) est monté sur un élément de structure (54) respectif.

9. Ensemble pour l'alignement automatique de rails selon l'une des revendications précédentes, dans lequel chaque système d'alignement (10, 20) comprend au moins une accroche (60) adaptée pour être fixée de manière amovible à au moins une accroche correspondante de l'élément de voie (70).

10. Ensemble pour l'alignement automatique de rails selon la revendication 9, dans lequel l'au moins une accroche (60) du système d'alignement (10, 20) comprend une plaque (71) adaptée pour être fixée à une accroche correspondante de l'élément de voie (70), ladite plaque (71) étant réglable en fonction d'un type de ladite accroche de l'élément de voie (70).

11. Ensemble pour l'alignement automatique de rails selon la revendication 10, dans lequel l'élément de voie (70) est une traverse de voie, et dans lequel la plaque (71) comprend :
- des premiers moyens de fixation à une accroche de type tirefond ou de type tige filetée de la traverse de voie (70),
- des deuxièmes moyens de fixation à une accroche de type clip de la traverse de voie (70), et
- des troisièmes moyens de fixation au système d'alignement (10, 20).

12. Procédé d'alignement automatique de rails à l'aide d'un ensemble pour l'alignement automatique de rails selon l'une quelconque des revendications précédentes, comprenant les étapes suivantes :
- mise en place du premier système d'alignement (10) sur le premier élément de voie (70) ;
- mise en place du deuxième système d'alignement (20) sur le deuxième élément de voie (70) ;
**caractérisé en ce que** ledit procédé comprend en outre les étapes suivantes :
- acquisition d'une position du premier rail (100) et/ou du deuxième rail (200) au moyen du système d'acquisition d'une position (30) ;
- ajustement automatique d'une position du premier rail (100) et/ou du deuxième rail (200) au moyen du premier système d'actionnement (51, 52) et/ou du deuxième système d'actionnement (51, 52), de sorte à aligner le premier rail (100) et le deuxième rail (200).

## Patentansprüche

1. Anordnung zum automatischen Ausrichten von Schienen, umfassend:
- ein erstes Ausrichtungssystem (10), das geeignet ist, auf einem ersten Gleiselement (70) im Bereich einer ersten Schiene (100) platziert zu sein;
- ein zweites Ausrichtungssystem (20), das geeignet ist, auf einem zweiten Gleiselement (70) im Bereich einer zweiten Schiene (200) platziert zu sein;
**dadurch gekennzeichnet, dass** die Anordnung ferner umfasst
- ein Positionserfassungssystem (30), das mindestens einen Positionssensor für die erste Schiene (100) und/oder für die zweite Schiene (200) umfasst, wobei das erste Ausrichtungssystem (10) ein erstes Betätigungssystem (51, 52) umfasst, das geeignet ist, eine Position der ersten Schiene (100) in Abhängigkeit von einer von dem Erfassungssystem (30) gemessenen Position automatisch einzustellen, und/oder das zweite Ausrichtungssystem (20) ein zweites Betätigungssystem (51, 52) umfasst, das geeignet ist, eine Position der zweiten Schiene (200) in Abhängigkeit von einer von dem Erfassungssystem (30) gemessenen Position automatisch einzustellen.

2. Anordnung zum automatischen Ausrichten von Schienen nach Anspruch 1, wobei das Positionserfassungssystem (30) geeignet ist, eine relative Position der ersten Schiene (100) und der zweiten Schiene (200) zueinander zu messen.

3. Anordnung zum automatischen Ausrichten von Schienen nach Anspruch 1 oder Anspruch 2, wobei jedes Betätigungssystem (51, 52) mindestens ein Paar Betätigungszylinder (51, 52) mit zwei Zylindern umfasst, wobei jeder Zylinder des Paars Betätigungszylinder (51, 52) geeignet ist, sich auf einer jeweiligen Seite der Schiene (100, 200), deren Position einzustellen ist, zu erstrecken und die Schiene (100, 200) zwecks ihrer Ausrichtung zu verlagern.

4. Anordnung zum automatischen Ausrichten von Schienen nach Anspruch 3, wobei jedes Betätigungssystem (51, 52) ein Paar Translationsbetätigungszylinder (51) umfasst, das geeignet ist, die Schiene (100, 200) translatorisch entlang einer Schienenquerrichtung (Y) und/oder entlang einer Schienenhöhenrichtung (Z) zu verlagern.

5. Anordnung zum automatischen Ausrichten von Schienen nach Anspruch 4, wobei jeder der beiden Zylinder des Paars Translationsbetätigungszylinder (51) geeignet ist, in Kontakt mit einem Schienenkopf der Schiene (100, 200) auf einer jeweiligen Seite des Schienenkopfes (100, 200) positioniert zu sein.

6. Anordnung zum automatischen Ausrichten von Schienen nach einem der Ansprüche 3 bis 5, wobei jedes Betätigungssystem (51, 52) ein Paar Drehbetätigungszylinder (52) umfasst, das geeignet ist, eine Neigung der Schiene (100, 200) um eine Schienenlängsrichtung (X) zu ändern.

7. Anordnung zum automatischen Ausrichten von Schienen nach einem der Ansprüche 3 bis 6, wobei jedes Ausrichtungssystem (10, 20) ein einzelnes Strukturelement (53) in Form eines starren Rahmens umfasst, der geeignet ist, sich auf beiden Seiten der Schiene (100, 200) zu erstrecken, deren Position einzustellen ist, wobei jeder Zylinder des mindestens einen Paars Betätigungszylinder (51, 52) auf dem einzelnen Strukturelement (53) angebracht ist.

8. Anordnung zum automatischen Ausrichten von Schienen nach einem der Ansprüche 3 bis 6, wobei jedes Ausrichtungssystem (10, 20) zwei verschiedene Strukturelemente (54) umfasst, wobei jedes Strukturelement (54) geeignet ist, sich auf einer jeweiligen Seite der Schiene (100, 200) zu erstrecken, deren Position einzustellen ist, wobei jeder Zylinder des mindestens einen Paars Betätigungszylinder (51, 52) auf einem jeweiligen Strukturelement (54) angebracht ist.

9. Anordnung zum automatischen Ausrichten von Schienen nach einem der vorhergehenden Ansprüche, wobei jedes Ausrichtungssystem (10, 20) mindestens eine Aufhängung (60) umfasst, der geeignet ist, lösbar an mindestens einer entsprechenden Aufhängung des Schienenelements (70) befestigt zu sein.

10. Anordnung zum automatischen Ausrichten von Schienen nach Anspruch 9, wobei die mindestens eine Aufhängung (60) des Ausrichtungssystems (10, 20) eine Platte (71) umfasst, die geeignet ist, an einer entsprechenden Aufhängung des Gleiselements (70) befestigt zu sein, wobei die Platte (71) in Abhängigkeit von einem Typ der Aufhängung des Gleiselements (70) regulierbar ist.

11. Anordnung zum automatischen Ausrichten von Schienen nach Anspruch 10, wobei das Gleiselement (70) eine Gleisschwelle ist, und wobei die Platte (71) umfasst:
- erste Mittel zur Befestigung an einer Aufhängung vom Typ Schwellenschraube oder Gewindestange der Gleisschwelle (70),
- zweite Mittel zur Befestigung an einer Aufhängung vom Typ Clip der Gleisschwelle (70), und
- dritte Mittel zur Befestigung am Ausrichtungssystem (10, 20).

12. Verfahren zum automatischen Ausrichten von Schienen mit Hilfe einer Anordnung zum automatischen Ausrichten von Schienen nach einem der vorhergehenden Ansprüche, das die folgenden Schritte umfasst:
- Platzieren des ersten Ausrichtungssystems (10) auf dem ersten Gleiselement (70);
- Platzieren des zweiten Ausrichtungssystems (20) auf dem zweiten Gleiselement (70);
**dadurch gekennzeichnet, dass** das Verfahren ferner die folgenden Schritte umfasst:
- Erfassen einer Position der ersten Schiene (100) und/oder der zweiten Schiene (200) mittels des Positionserfassungssystems (30);
- automatisches Einstellen einer Position der ersten Schiene (100) und/oder der zweiten Schiene (200) mittels des ersten Betätigungssystems (51, 52) und/oder des zweiten Betätigungssystems (51, 52), so dass die erste Schiene (100) und die zweite Schiene (200) ausgerichtet werden.

## Claims

1. Assembly for automatic rail alignment, comprising:
∘ a first alignment system (10) adapted to be placed on a first track element (70) at a first rail (100);
∘ a second alignment system (20) adapted to be placed on a second track element (70) at a second rail (200); and
∘ a position acquisition system (30), comprising at least one position sensor of the first rail (100) and/or the second rail (200), wherein the first alignment system (10) comprises a first actuation system (51, 52) adapted to automatically adjust a position of the first rail (100) based on a position measured by the acquisition system (30) and/or the second alignment system (20) comprises a second actuation system (51, 52) adapted to automatically adjust a position of the second rail (200) based on a position measured by the acquisition system (30).

2. Assembly for automatic rail alignment according to claim 1, wherein the position acquisition system (30) is adapted to measure a relative position of the first rail (100) and the second rail (200) relative to each other.

3. Assembly for automatic rail alignment according to claim 1 or claim 2, wherein each actuation system (51, 52) comprises at least one pair of actuation cylinders (51, 52) comprising two cylinders, each cylinder of the pair of actuation cylinders (51, 52) being adapted to extend on a respective side of the rail (100, 200) whose position is to be adjusted, and to move said rail (100, 200) for alignment purposes.

4. Assembly for automatic rail alignment according to claim 3, wherein each actuation system (51, 52) comprises a pair of translation actuation cylinders (51) adapted to move said rail (100, 200) in translation along a transverse rail direction (Y) and/or along a rail height direction (Z).

5. Assembly for automatic rail alignment according to claim 4, wherein each of the two cylinders of the pair of translation actuation cylinders (51) is adapted to be positioned in contact with a head of the rail (100, 200) on a respective side of the head of the rail (100, 200).

6. Assembly for automatic rail alignment according to any one of claims 3 to 5, wherein each actuation system (51, 52) comprises a pair of rotation actuation cylinders (52) adapted to vary an inclination of said rail (100, 200) around a longitudinal rail direction (X).

7. Assembly for automatic rail alignment according to any one of claims 3 to 6, wherein each alignment system (10, 20) comprises a single structural element (53) in the form of a rigid frame adapted to extend on either side of the rail (100, 200) whose position is to be adjusted, wherein each cylinder of the at least one pair of actuation cylinders (51, 52) is mounted on the single structural element (53).

8. Assembly for automatic rail alignment according to any one of claims 3 to 6, wherein each alignment system (10, 20) comprises two separate structural elements (54), each structural element (54) being adapted to extend on a respective side of the rail (100, 200) whose position is to be adjusted, wherein each cylinder of the at least one pair of actuation cylinders (51, 52) is mounted on a respective structural element (54).

9. Assembly for automatic rail alignment according to any one of the preceding claims, wherein each alignment system (10, 20) comprises at least one hook (60) adapted to be removably attached to at least one corresponding hook of the track element (70).

10. Assembly for automatic rail alignment according to claim 9, wherein the at least one hook (60) of the alignment system (10, 20) comprises a plate (71) adapted to be attached to a corresponding hook of the track element (70), said plate (71) being adjustable based on a type of said hook of the track element (70).

11. Assembly for automatic rail alignment according to claim 10, wherein the track element (70) is a track sleeper, and wherein the plate (71) comprises:
• first fastening means to a hook of screw spike type or threaded rod type of the track sleeper (70),
• second fastening means to a hook of clip type of the track sleeper (70), and
• third fastening means to the alignment system (10, 20).

12. Method for automatic rail alignment using an assembly for automatic rail alignment according to any one of the preceding claims, comprising the following steps:
• placing the first alignment system (10) on the first track element (70);
• placing the second alignment system (20) on the second track element (70);
• acquiring a position of the first rail (100) and/or the second rail (200) by means of the position acquisition system (30);
• automatically adjusting a position of the first rail (100) and/or the second rail (200) by means of the first actuation system (51, 52) and/or the second actuation system (51, 52), so as to align the first rail (100) and the second rail (200).
